# FASCICULE DE BREVET EUROPEEN

(11) **EP 2 321 564 B1**
(45) Date de publication et mention de la délivrance du brevet: **08.04.2015**
(21) Numéro de dépôt: 08785479.0
(22) Date de dépôt: 10.08.2008
(51) Int. Cl.: F16L 21/00, F16L 25/12

(54) **SYSTÈME DE COUPLAGE DE DEUX DISPOSITIFS COMPRENANT UN MANCHON SOUPLE**
SYSTEM ZUR VERBINDUNG VON ZWEI VORRICHTUNGEN MIT EINER FLEXIBLEN HÜLSE
SYSTEM FOR COUPLING TWO DEVICES INCLUDING A FLEXIBLE SLEEVE

(43) Date de publication de la demande: 18.05.2011
(73) Titulaire: Pharma Technology S.A., 1400 Nivelles (BE)
(72) Inventeur: DOLLINGER, Martial, B-1420 Braine l'Alleud (BE)
(74) Mandataire: Mille, Eric
(86) Numéro de dépôt international: PCT/EP2008/006597
(87) Numéro de publication internationale: WO 2010/017824

(56) Documents cités:
- EP-A- 1 338 840
- US-A- 5 823 231

## Description

La présente invention se rapporte à un manchon souple agencé pour être couplé à une conduite rigide correspondante, à une telle conduite agencée pour être couplée audit manchon et à un système de raccordement d'un premier dispositif à un second dispositif munis chacun d'une telle conduite, ce système comprenant un tel manchon souple.

Dans divers domaines technique, il est nécessaire de connecter entre eux deux dispositifs dont l'un au moins peut être animé d'un certain mouvement relativement à l'autre, tel que des vibrations engendrées par le fonctionnement de ce dispositif, de sorte à pouvoir faire circuler par un élément de connexion entre eux desdits dispositifs, un fluide ou tout autre matériau destiné à être transporté d'un dispositif à l'autre. Pour que le mouvement relatif des dispositif à connecter n'endommage pas l'élément de connexion ou ne le désolidarise pas de l'un au moins des dispositifs, cet élément de connexion est généralement constitué d'un manchon souple capable de suivre le mouvement dont question. De tels manchons sont généralement constitués d'un matériau de type caoutchouc, PVC ou silicone ou de tout autre matériau souple approprié.

Dans le domaine de l'industrie automobile, un tel manchon souple consiste par exemple en une durite agencée pour coupler un réservoir de carburant à un moteur à alimenter en ce carburant ou à un radiateur d'eau à ce même moteur de sorte à pouvoir le refroidir grâce à l'eau en question.

D'autres manchons souples sont utilisés dans le domaine de l'industrie pharmaceutique pour connecter la sortie d'un dispositif de fabrication de comprimés ou de gélules pharmaceutiques à l'entrée d'un dispositif de dépoussiérage de ces derniers dont l'élément de dépoussiérage est généralement animé d'un mouvement vibratoire ainsi que la sortie de ce dispositif de dépoussiérage à l'entrée d'un dispositif de détection de métaux dans les comprimés ou gélules dépoussiérées, disposé entre le dispositif de dépoussiérage et un dispositif de conditionnement de ces gélules ou comprimés pour en éliminer les exemplaires pollués par des particules métalliques avant leur conditionnement, ou directement à l'entrée d'un tel dispositif de conditionnement.

Généralement, que ce soit dans l'industrie automobile ou dans l'industrie pharmaceutique, le manchon souple utilisé pour coupler deux dispositifs est fixé par chacune de ses extrémités à l'un des dispositifs, en enfilant une extrémité du manchon sur celle d'une conduite rigide du dispositif dont question ou en disposant cette extrémité contre celle de cette conduite rigide et les maintenant en place au moyen d'une bague de serrage agencée pour appliquer fermement l'extrémité du manchon contre celle de la conduite rigide, généralement de manière étanche au matériau à transporter d'un dispositif à l'autre par ledit manchon.

En particulier, lorsque dans l'industrie pharmaceutique un manchon souple est utilisé notamment pour connecter une conduite rigide de la sortie d'un dispositif de fabrication de comprimés ou gélules à une autre conduite rigide de l'entrée d'un dispositif de dépoussiérage de tels comprimés ou gélules, les extrémités desdites conduites rigides sont pourvues d'un rebord périphérique et celles du manchon souple d'un rebord périphérique correspondant. Les rebords respectifs d'une extrémité du manchon et de celle d'une conduite rigide de l'un des dispositifs à coupler entre eux sont disposés l'un contre l'autre et une bague de serrage constituée de deux éléments articulés l'un à l'autre et présentant chacun une gorge intérieure de dimensions complémentaires à celles des deux rebords en question lorsqu'ils sont disposés l'un contre l'autre, est appliquée autour de l'assemblage qu'ils constituent de sorte que lesdits rebords s'engagent dans ladite gorge et la bague est ensuite appliquée fermement autour de ces rebords par un élément de fermeture de cette bague, connectant et rapprochant l'un vers l'autre les extrémités libres de ses deux éléments articulés, assurant ainsi l'étanchéité de la connexion du manchon à la conduite rigide de chacun des dispositifs à coupler.

Un tel système de couplage présente les inconvénients premièrement de nécessiter l'utilisation d'une bague de serrage pour assurer l'étanchéité de la connexion entre le manchon et la conduite rigide, deuxièmement de nécessiter un parfait alignement de chaque extrémité du manchon et de chaque conduite rigide pour que la bague de serrage assure l'étanchéité de la connexion sans risque de pliure du rebord d'une extrémité du manchon et troisièmement d'être difficile à mettre en oeuvre par un seul opérateur dès lors que ce dernier doit d'une main disposer les rebords respectivement d'une extrémité du manchon et d'une conduite rigide l'un contre l'autre et de l'autre main à la fois disposer la bague de serrage autour desdits rebords et la refermer sur eux.

Dans le domaine de l'industrie automobile, la demande de brevet US 2005/0230971 propose un système de couplage d'un réservoir de carburant à un moteur dans lequel un manchon souple vient s'enfiler sur une conduite rigide possédant un bourrelet circulaire périphérique à son extrémité. Le manchon possède également une gorge circulaire périphérique à proximité de son extrémité. Un joint annulaire est disposé dans cette gorge et est écrasé par la conduite lorsque le manchon y est enfilée. Dans cette position, la gorge du manchon ne reçoit pas le bourrelet de la conduite. Une bague de serrage est disposée autour de l'extrémité du manchon souple dans sa partie enfilée sur la conduite rigide pour assurer l'étanchéité de la connexion entre le manchon et la conduite.

Un tel système présente l'inconvénient d'une part de nécessiter la présence d'une bague de serrage pour assurer l'étanchéité de la connexion entre le manchon souple et la conduite rigide sur laquelle il est enfilé et d'autre part de pouvoir rendre difficile la mise en oeuvre de ce système par un seul opérateur qui doit à la fois manipuler le manchon, la conduite et la bague de serrage.

Le brevet US 6234543 propose quant à lui un système de couplage de deux dispositifs, comprenant un manchon souple qui possède une pluralité de gorges périphériques à proximité de chacune de ses extrémités et vient s'enfiler sur l'extrémité d'une conduite rigide de chaque dispositif à coupler, cette extrémité possédant une pluralité de bourrelets périphériques correspondants agencés pour être reçus dans lesdites gorges. Une bague de serrage dont la forme est complémentaire de celle des gorges et bourrelets du manchon et de la conduite, vient lorsque le manchon est enfilé sur la conduite et que les bourrelets de cette dernière sont reçus par les gorges du manchon, assurer dans cette position l'étanchéité de la connexion entre le manchon et la conduite.

Un tel système présente lui aussi l'inconvénient d'une part de nécessiter la présence d'une bague de serrage pour assurer l'étanchéité de la connexion entre le manchon souple et la conduite rigide sur laquelle il est enfilé et d'autre part de pouvoir rendre difficile la mise en oeuvre de ce système par un seul opérateur qui doit à la fois manipuler le manchon, la conduite et la bague de serrage.

La présente invention résout les problèmes susmentionnés en offrant premièrement un manchon souple connecté à une conduite rigide correspondante selon la revendication 1, dont le préambule correspond au dispositif selon le document US 5 823 231, et comprenant une première extrémité agencée pour être enfilée sur une extrémité de la conduite; la première extrémité du manchon comprenant une gorge périphérique pratiquée dans sa face intérieure, agencée pour recevoir, lorsque cette extrémité est enfilée sur l'extrémité correspondante de la conduite, un bourrelet périphérique complémentaire agencé sur la face extérieure de cette extrémité, le périmètre intérieur de l'extrémité du manchon étant inférieur au périmètre extérieur de l'extrémité de la conduite dans une mesure telle que la réception dudit bourrelet dans ladite gorge et la différence entre le périmètre de la face intérieure de la première extrémité du manchon et celui de la face extérieure de l'extrémité de la conduite assure une connexion du manchon et de la conduite étanche au matériau que ce manchon et cette conduite sont destinés à transporter.

L'invention concerne également l'usage de ce système pour raccorder un premier dispositif de fabrication de comprimés ou gélules pharmaceutiques à un second dispositif de dépoussiérage de ces comprimés ou gélules ou pour raccorder un tel second dispositif de dépoussiérage à un troisième dispositif de détection de métal dans une gélule ou un comprimé pharmaceutique ou à un troisième dispositif de conditionnement desdits comprimés ou gélules.

Grâce que fait que la première extrémité du manchon selon l'invention comprend une gorge périphérique pratiquée dans sa face intérieure, agencée pour recevoir, lorsque cette extrémité est enfilée sur une extrémité de la conduite rigide sur laquelle le manchon est agencé pour être enfilé, un bourrelet périphérique complémentaire agencé sur la face extérieure de cette extrémité et au fait que le périmètre intérieur de l'extrémité du manchon est inférieur au périmètre extérieur de l'extrémité de la conduite dans une mesure telle que la réception dudit bourrelet dans ladite gorge et la différence entre le périmètre de la face intérieure de la première extrémité du manchon et celui de la face extérieure de l'extrémité de la conduite assure une connexion du manchon et de la conduite étanche au matériau que ce manchon et cette conduite sont destinés à transporter, l'invention permet d'éliminer la nécessité d'utiliser une bague de serrage pour assurer l'étanchéité de ce couplage et les inconvénients mentionnés plus hauts associés à cette nécessité.

L'invention va à présent être décrite plus en détails sur base d'un mode de réalisation représenté aux figures jointes dans lesquelles:

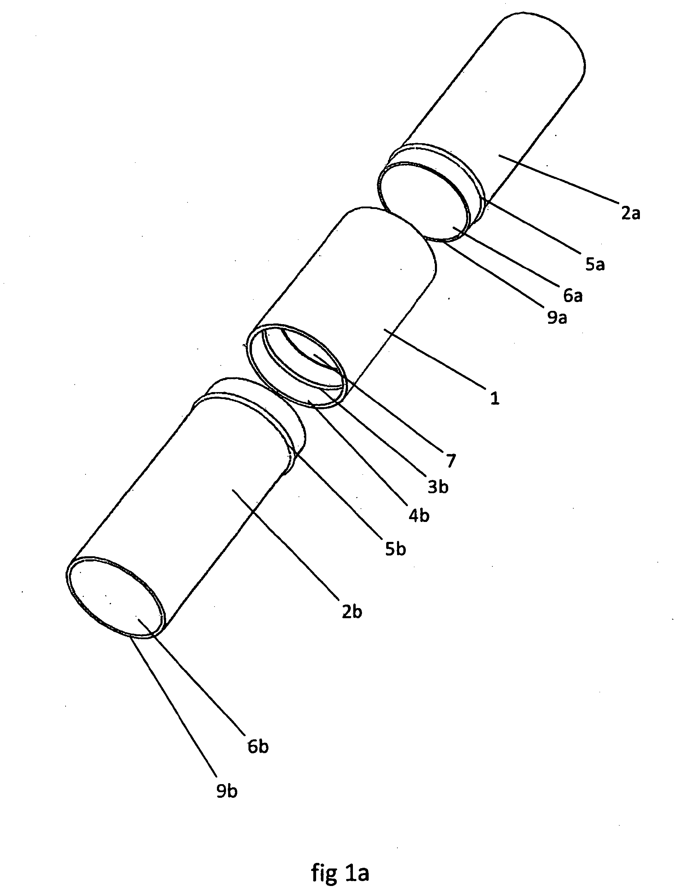

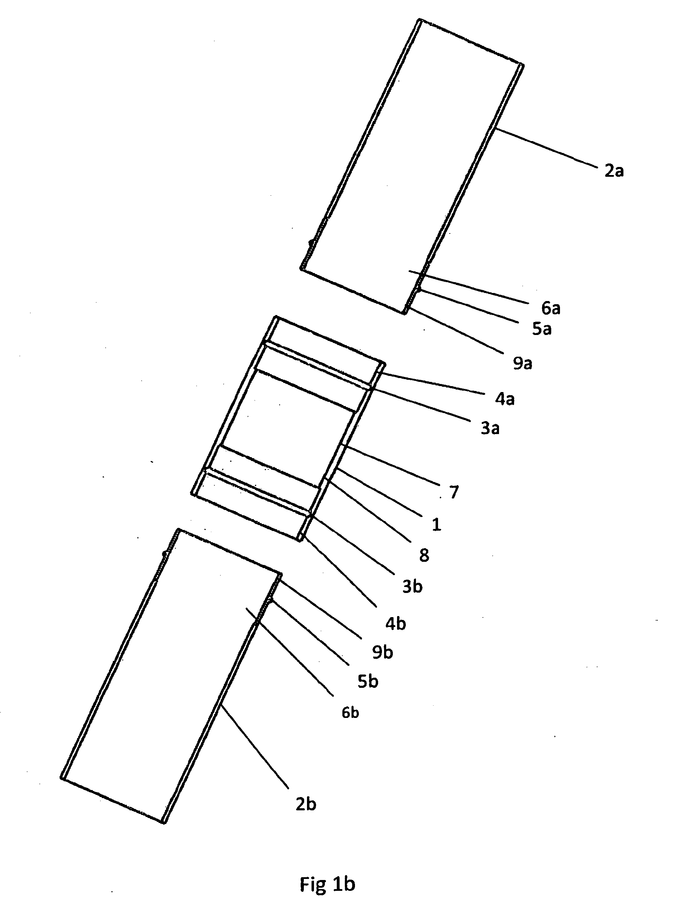

La fig. 1 a est une vue en perspective d'un système de couplage selon l'invention dans laquelle le manchon n'est pas enfilé sur l'extrémité d'une conduite de chaque dispositif à coupler.
La fig. 1b est une vue en coupe transversale du système illustré à la fig. 1 a

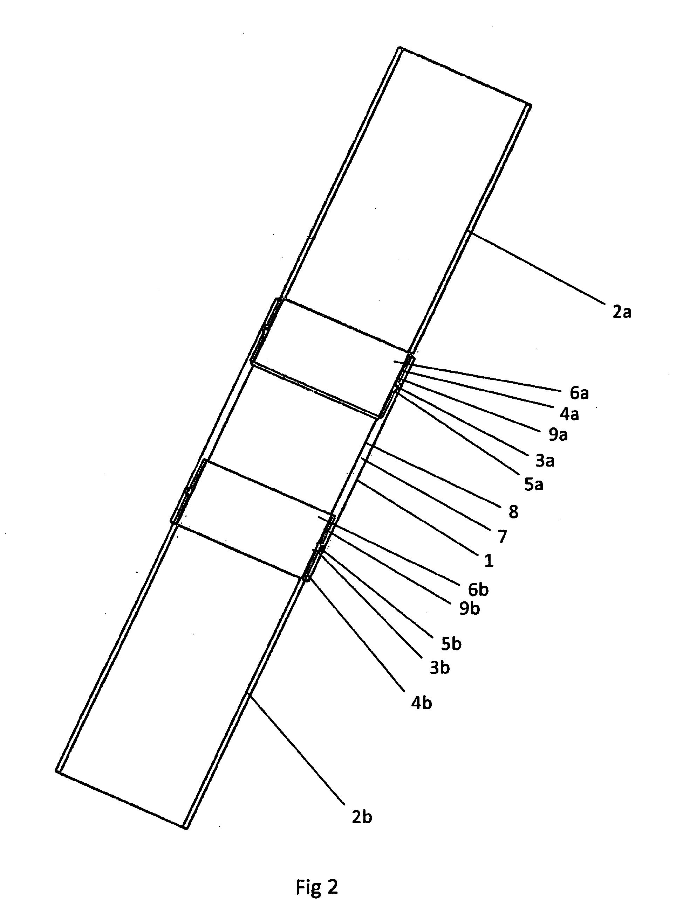

La fig. 2 est une vue en coupe transversale du système illustré à la fig. 1 a dans laquelle le manchon est enfilé sur l'extrémité d'une conduite de chaque dispositif à coupler.

En se rapportant aux figures y est représenté un système de couplage d'un premier dispositif à un second dispositif comprenant un manchon souple 1 agencé pour être connecté à deux conduites rigides 2a, 2b connectées ou intégrée respectivement au premier et au second dispositif, ledit manchon comprenant une première extrémité et une seconde extrémité agencées pour être enfilées respectivement sur une extrémité de chaque conduite, chaque extrémité du manchon comprend une gorge périphérique 3a, 3b pratiquée dans sa face intérieure, agencée pour recevoir, lorsque cette extrémité est enfilée sur une extrémité d'une conduite, un bourrelet périphérique complémentaire 5a, 5b agencé sur la face extérieure de l'extrémité de chaque conduite. Le périmètre intérieur 4a, 4b de chaque extrémité du manchon est inférieur au périmètre extérieur 6a, 6b de l'extrémité de chaque conduite avant que le manchon y soit enfilé, dans une mesure telle que la réception d'un bourrelet dans une gorge et la différence entre le périmètre de la face intérieure de chaque extrémité du manchon et celui de la face extérieure de l'extrémité de chaque conduite assure une connexion du manchon et de la conduite étanche au matériau que ce manchon et cette conduite sont destinés à transporter. La différence entre le périmètre intérieur de chaque extrémité du manchon et le périmètre extérieur de l'extrémité d'une conduite est de préférence d'au moins 5 pour cent, plus préférablement encore d'au moins 10 pour cent. Le manchon comprend en outre une portion intérieure 7 adjacente à chacune de ses extrémités et dont le périmètre 8 est sensiblement égal au périmètre 9a, 9b de la face intérieure 6a, 6b de chaque conduite, de sorte à ménager un passage continu entre l'intérieur de la conduite et celui du manchon lorsque celui-ci est enfilé sur ladite conduite. Le système selon l'invention illustrée aux figures est utilisé pour raccorder un premier dispositif de fabrication de comprimés ou gélules pharmaceutiques à un second dispositif de dépoussiérage de ces comprimés ou gélules ou pour raccorder un tel premier dispositif de dépoussiérage à un second dispositif de conditionnement desdits comprimés ou gélules.

## Revendications

1. Système de raccordement d'un premier dispositif à un second dispositif comprenant un manchon souple (1) et au moins une extrémité de conduite rigide (2a, 2b), ledit manchon comprenant au moins une extrémité de manchon agencée pour être enfilée sur ladite extrémité de conduite, ladite extrémité de manchon comprenant une gorge périphérique (3a, 3b) pratiquée dans sa face intérieure et ladite extrémité de conduite comprenant un bourrelet périphérique complémentaire (5a, 5b) agencé sur sa face extérieure, ladite gorge étant agencée pour recevoir ledit bourrelet lorsque le ladite extrémité de manchon est enfilée sur ladite extrémité de conduite, le périmètre intérieur (4a, 4b) de ladite extrémité de manchon étant inférieur au périmètre extérieur (6a, 6b) de ladite extrémité de conduite avant d'y être enfilé, dans une mesure telle que la réception dudit bourrelet dans ladite gorge et la différence entre le périmètre de la face intérieure de ladite extrémité de manchon et celui de la face extérieure de ladite extrémité de conduite assure une connexion du manchon et de cette conduite, étanche au matériau que ce manchon et cette conduite sont destinés à transporter, **caractérisé en ce que** ledit manchon comprend une portion interne (7) adjacente à chaque extrémité dudit manchon, le périmètre (8) de la face intérieure de la portion interne étant sensiblement égal au périmètre (9a, 9b) de la face intérieure de ladite extrémité de conduite, de sorte à ménager un passage contenu entre l'intérieur de cette extrémité de conduite et celui du manchon lorsque ladite extrémité de manchon est enfilée sur ladite extrémité de conduite.

2. Système de raccordement selon la revendication 1 **caractérisé en ce qu'**il comprend deux telles extrémités de conduites et **en ce que** le manchon comprend deux telles extrémités de manchon.

3. Usage d'un système selon la revendication 2 pour coupler un premier dispositif de fabrication de comprimés ou gélules pharmaceutiques à un second dispositif de dépoussiérage de ces comprimés ou gélules ou pour raccorder un tel premier dispositif de dépoussiérage à un second dispositif de conditionnement desdits comprimés ou gélules, le premier et le second dispositif intégrant ou étant connecté respectivement à une différente desdites extrémités de conduites.

## Patentansprüche

1. System für den Anschluss einer ersten Vorrichtung an eine zweite Vorrichtung bestehend aus einer flexiblen Muffe (1) und mindestens einem starren Ende der Rohrleitung (2a; 2b), die vorerwähnte Muffe enthält mindestens ein Muffenende, das gedacht ist, auf das genannte Ende der Rohrleitung aufgeschoben zu werden, das genannte Muffenende besitzt auf seiner Innenseite eine periphere Kehle (3a, 3b) und das genannte Ende der Rohrleitung besitzt auf deren Außenseite einen zusätzlichen peripheren Wulst (5a, 5b) die genannte Kehle ist so angeordnet, dass sie die besagte Wulst aufnimmt, wenn das genannte Muffenende auf das genannte Ende der Rohrleitung aufgeschoben wird, der Innenumfang (4a, 4b) des genannten Muffenendes ist vor dem Aufschieben geringer als der äußere Umfang (6a, 6b) des genannten Ende der Rohrleitung dergestalt, dass die Aufnahme des besagten Wulstes in der genannten Kehle sowie der Unterschiede zwischen dem Umfang der inneren Seite des genannten Muffenendes und derjenige der Außenseite des genannten Endes der Rohrleitung eine Verbindung zwischen der Muffe und diesem Rohr sicherstellen, die gegenüber dem Material, das diese Muffe und diese Rohrleitung transportieren sollen, undurchlässig ist, **dadurch gekennzeichnet, dass** die genannte Muffe einen inneren Abschnitt enthält (7), der an jedes Ende der besagten Muffe angrenzt, der Umfang (8) der Innenseite des inneren Abschnitts ist im Wesentlichen dem Umfang (9a, 9b) der Innenseite der genannten Rohrleitung gleich, um einen kontinuierlichen Durchgang zwischen dem Inneren dieser Rohrleitung und demjenigen der Muffe zu organisieren, wenn das genannte Muffenende auf das genannte Ende der Rohrleitung aufgeschoben ist.

2. System für den Anschluss gemäß Anspruch 1, der **dadurch gekennzeichnet ist, dass** er zwei solche Führungsrohrenden besitzt und dadurch, dass die Muffe zwei solche Muffenenden besitzt.

3. Anwendung eines Systems gemäß Anspruch 2, um eine erste Vorrichtung zur Herstellung von pharmazeutischen Tabletten und Kapseln an eine zweite Vorrichtung zum Entstauben dieser Tabletten und Kapseln anzuschließen oder, um eine solche erste Vorrichtung zum Entstauben mit einer zweiten Vorrichtung zur Verpackung dieser Tabletten oder Kapseln miteinander zu verbinden, wobei die erste und die zweite Vorrichtung jeweils an ein anderes der besagten Enden der Rohrleitung integriert oder an diese angeschlossen sind.

## Claims

1. Connexion system of a first device to a second device comprising a flexible sleeve (1) and at least one end of a rigid pipe (2a, 2b), the said sleeve having at least one sleeve end arranged for overlaying the said pipe end, and comprising a peripheral recess (3a, 3b) arranged on its inner face and said pipe end comprising a corresponding peripheral protrusion (5a, 5b) arranged on its outer face, the said recess being arranged to fit the said protrusion when the said sleeve end is overlaying the said pipe end, the inner perimeter (4a, 4b) of the said sleeve end being smaller than the outer perimeter (6a, 6b) of the said pipe end before overlaying the latter, so that the fitting of the said protrusion in the said recess and the difference between the perimeter of the inner face the the said sleeve end and that of the outer face of the said pipe end ensures a connection of the sleeve and the pipe which is tight to the materials that this sleeve and this pipe will carry, **characterised in that** the sleeve has an internal portion (7) adjacent to each end of the said sleeve, the perimeter (8) of the inner face of the internal portion being equal to the perimeter (9a, 9b) of the inner face of the said pipe end, in order to create a continuous passage between the inside of the pipe end and that of the sleeve when the said sleeve end is overlaying the said pipe end.

2. Connection system according to claim 1 **characterised in that** it comprises two such pipe ends and **in that** the sleeve comprises two such sleeve ends.

3. Use of a system according to claim 2 for coupling a first manufacturing device of pharmaceutical pills or gels to a second device for dedusting the said pills or gels or for connecting such a first cleaning device to a second packaging device of pills or gels, the first and second device integrating or being respectively connected to a different of said pipe ends.
